# EUROPÄISCHE PATENTSCHRIFT

(11) **EP 0 799 349 B1**
(45) Veröffentlichungstag und Bekanntmachung des Hinweises auf die Patenterteilung: **27.03.2002**
(21) Anmeldenummer: 95942099.3
(22) Anmeldetag: 11.12.1995
(51) Int. Cl.: D21H 17/08, C08L 97/02, C08G 18/80, C08G 18/70, C08G 18/28

(54) **WIEDERAUFSCHLIESSBARE CELLULOSEHALTIGE MATERIALIEN**
REDIGESTIBLE CELLULOSE-CONTAINING MARERIALS
MATERIAUX CELLULOSIQUES RELESSIVABLES

(30) Priorität: 23.12.1994 DE 4446334
(43) Veröffentlichungstag der Anmeldung: 08.10.1997
(73) Patentinhaber: BAYER AG, 51368 Leverkusen (DE)
(72) Erfinder: JANSEN, Bernhard, D-51061 Köln (DE); KÖNIG, Joachim, D-51519 Odenthal (DE); THIELE, Bernd, D-51519 Odenthal (DE); REINERS, Jürgen, D-51373 Leverkusen (DE); MEYER, Rolf-Volker, D-51373 Leverkusen (DE)
(86) Internationale Anmeldenummer: EP9504868
(87) Internationale Veröffentlichungsnummer: WO9620309

(56) Entgegenhaltungen:
- EP-A- 0 478 216
- EP-A- 0 582 166
- FR-A- 2 096 740
- US-A- 3 505 001
- US-A- 3 969 394

## Beschreibung

Die Erfindung betrifft wiederaufschließbare cellulosehaltige, gegebenenfalls holzhaltige Materialien, die unter Verwendung wasserdispergierbarer Polyisocyanate hergestellt werden.

EP-A 0 074 544 beschreibt wäßrige Dispersionen aus 1. einem verstärkten Harzleim und 2. hydrophobem Ketendimer oder hydrophoben Isocyanaten mit mindestens 12 C-Atomen. Diese Dispersionen werden durch Mitverwendung eines kationischen Dispergiermittels gewonnen.

Ebenfalls bekannt ist aus DE-A 4 211 480 ein Verfahren zur ausschließlichen Naßfestausrüstung von Papier mit Hilfe wasserdispergierbarer Polyisocyanatgemische, welche 2 bis 20 Gew.-% in Form von Polyetherketten angeordneter Ethylenoxideinheiten aufweisen, wobei diese Ketten im statistischen Mittel 5 bis 70 Ethylenoxideinheiten aufweisen.

EP-A 0 582 166 beschreibt die Anwendung von Polyisocyanaten, enthaltend tert. Aminogruppen und/oder Ammoniumgruppen und 0 bis 30 Gew.-% (bezogen auf das Gemisch) Ethylenoxideinheiten in Form von Polyetherketten, mit dem Ziel, trockenfest und naßfest ausgerüstete und/oder geleimte cellulosehaltige Materialien herzustellen.

Aus US 3 505 001 ist ein Verfahren zum Behandeln von cellulosehaltigem Material mit polyhydroxy-modifizierten Isocyanaten bekannt.

FR-A 2 096 740 beschreibt Kernbindemittel für die Gießereitechnik auf Basis von Urethanen zu deren Herstellung bestimmte Polyisocyanat-Prepolymere, Polyydroxylverbindungen und tertiäre Amine eingesetzt werden.

Aus EP-A 478 216 sind Harz-Zusammensetzungen bekannt, die hergestellt werden durch Umsetzung von Prepolymeren auf Basis von Hydroxyfettsäureestern, Polyetherpolyolen und Diisocyanaten mit Polyamin-polyimin-Komponenten.

US 3 969 394 beschreibt Polyisocyanate auf Basis von Bis(2-hydroxyethyl)-terephthalaten zur Herstellung von thermoplastischen Polyurethanharzen.

Allen unter Verwendung von Polyisocyanaten in der Masse hergestellten oder in der Oberfläche ausgerüsteten Papieren ist gemeinsam, dass sie je nach Aufwandsmenge schwer oder überhaupt nicht wieder aufgeschlossen werden können. Es ist ja Sinn der Naßfestausrüstung des Papiers mechanische Festigkeit bei Wasserdurchfeuchtung zu gewährleisten; eine Wiederaufschließbarkeit, beispielsweise in Wasser oder verdünnten, wäßrigen alkalischen Lösungen, ist daher im allgemeinen nicht möglich. Andererseits ist die Rückführung von Produktionsausschuß der Papier-, Karton- und Pappeproduktion (z.B. Randbeschnitt, sonstiger Verschnitt und Fehlchargen) sinnvoll und notwendig. Es besteht daher Bedarf an einem wasserdispergierbaren Polyisocyanat, das Naßfestigkeit sowie Trockenfestigkeit gewährleistet und auch Leimungswirkung besitzt und gleichzeitig dem cellulosehaltigen und gegebenenfalls holzhaltigen Material Wiederaufschließbarkeit unter den Bedingungen der Papierfabrikation verleiht.

Gegenstand der Erfindung sind wiederaufschließbare cellulosehaltige, gegebenenfalls holzhaltige Materialien, die erhältlich sind durch Behandeln von cellulosehaltigen, gegebenenfalls holzhaltigen Materialien mit wasserdispergierbaren Polyisocyanaten, welche ihrerseits durch Umsetzung folgender Ausgangskomponenten hergestellt werden:
a) modifizierte Polyisocyanate der Formel (II) 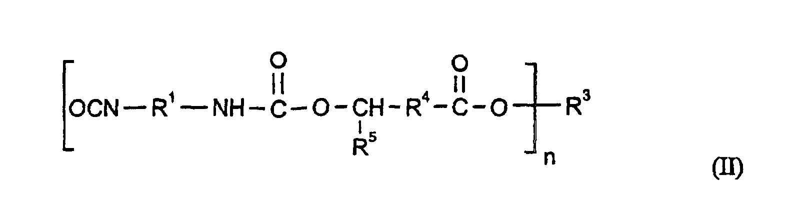 in der bedeuten:
   - R¹: einen aliphatischen Kohlenwasserstoffrest mit 2 bis 18 Kohlenstoffatomen; einen cycloaliphatischen Kohlenwasserstoffrest mit 4 bis 15 Kohlenstoffatomen; einen aromatischen Kohlenwasserstoffrest mit 6 bis 15 Kohlenstoffatomen oder einen araliphatischen Kohlenwasserstoffrest mit 8 bis 15 Kohlenstoffatomen,
   - R³: einen mindestens zweiwertigen Kohlenwasserstoffrest,
   - R⁴: einen aliphatischen Kohlenwasserstoffrest mit 1 bis 18 Kohlenstoffatomen, gegebenenfalls enthaltend mindestens eine Doppelbindung,
   - R⁵: einen aliphatischen Kohlenwasserstoffrest mit 1 bis 18 Kohlenstoffatomen oder Wasserstoff, wobei die Summe der von R⁴ und R⁵ repräsentierten Kohlenstoffatome 9 bis 34 beträgt, und
   - n: eine Zahl > 2,
b) nicht modifizierte Polyisocyanate,
c) Polyethylenoxid-polyetheralkohole, die gegebenenfalls Estergruppen enthalten,
d) cycloaliphatische und/oder aliphatische Amine, die gegebenenfalls Ether-, Ester- oder Amidgruppen enthalten und welche mindestens eine isocyanatreaktive fimktionelle Gruppe aufweisen und mindestens eine tertiäre Aminogruppe und/oder Ammoniumgruppe enthalten.

Eine weitere bevorzugte Ausführungsform sind wiederaufschließbare cellulosehaltige, gegebenenfalls holzhaltige Materialien, die erhältlich sind durch Verwendung modifizierter Polyisocyanate a) der Formel (III) 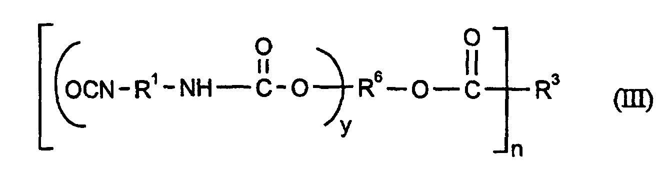 in der
- R¹ und R³: die oben genannten Bedeutungen haben,
- R⁶: für einen aliphatischen Kohlenwasserstoffrest mit 2 bis 15 Kohlenstoffatomen,
- n: für eine Zahl > 2 und
- y: für eine Zahl ≥ 1 steht.

Weiterer Gegenstand der Erfindung sind wasserdispergierbare Polyisocyanate, die erhältlich sind, indem in beliebiger Reihenfolge miteinander umgesetzt werden:
a) modifizierte Polyisocyanate der Formel (II) oder modifizierte Polyisocyanate der Formel (III)
b) nicht modifizierte Polyisocyanate,
c) Polyethylenoxid-polyetheralkohole, die gegebenenfalls Estergruppen enthalten,
d) cycloaliphatische und/oder aliphatische Amine, welche gegebenenfalls Ether-, Ester- oder Amidgruppen enthalten und welche mindestens eine isocyanatreaktive funktionelle Gruppe aufweisen und mindestens eine tertiäre Aminogruppe und/oder Ammoniumgruppe enthalten.

Ebenfalls Gegenstand der vorliegenden Erfindung ist das oben angegebene Verfahren zur Herstellung der erfindungsgemäßen wasserdispergierbaren Polyisocyanate.

Ebenfalls Gegenstand der Erfindung sind die modifizierten Polyisocyanate der Formel (III), worin n für eine Zahl > 2 steht.

Der Begriff "wasserdispergierbar" im Zusammenhang mit den erfindungsgemäßen Polyisocyanaten bedeutet, dass es sich um Polyisocyanate handelt, die in einer Konzentration von bis zu 70 Gew.-%, vorzugsweise bis zu 50 Gew.-% in Wasser feinteilige Dispersionen mit Partikelgrößen von < 500 nm ergeben.

Die modifizierten Polyisocyanate a) können wie folgt hergestellt werden:
A) Die modifizierten Polyisocyanate der Formel (II) sind Reaktionsprodukte von Diisocyanaten OCN-R¹-NCO mit Polyhydroxylverbindungen der Formel (V), die das Reaktionsprodukt eines Polyalkohols mit einer hydroxyfunktionellen Fettsäure sein können 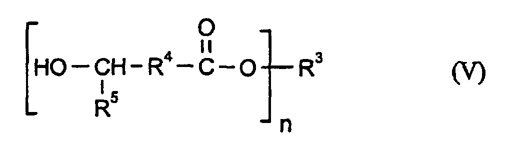 in der R³, R⁴, R⁵ und n die oben genannte Bedeutung haben. Als Polyalkohole kommen mehrwertige Alkohole in Frage, beispielsweise Glycerin, Trimethylolpropan, Pentaerythrit, Sorbit, Mannit oder Rohrzucker.
   Als hydroxylfunktionelle Fettsäuren kommen in Frage:
   Naturstoffe wie Ricinolsäure sowie Hydratisierungsprodukte ungesättigter Fettsäuren, wie sie in P. Karrer, Lehrbuch der organischen Chemie, G. Thieme Verlag, 1954, Seite 208, Mitte, beschrieben sind, die noch Doppelbindungen enthalten können (vgl. Definition von R⁴).
B) Die modifizierten Polyisocyanate der Formel (III) sind Reaktionsprodukte von Diisocyanaten OCN-R¹-NCO mit Polyhydroxylverbindungen der Formel (VI), die das Reaktionsprodukt einer Polycarbonsäure mit einem Polyol sein können 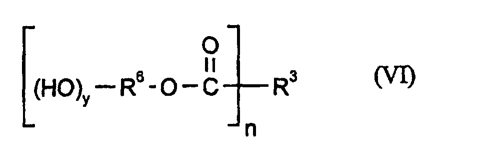 in der R³, R⁶, y und n die oben genannte Bedeutung haben.
   Als Polycarbonsäuren kommen Carbonsäuren mit mehr als 2 Carboxylfunktionen in Frage wie 1,2,3,4-Butantetracarbonsäure und Trimerfettsäure, wie beschrieben in "The Dimer Acids", edited by Edward C. Leonard, Humko Sheffield Chemical, 1975, Trimesinsäure, Pyromellithsäure, Cyclopentantetracarbonsäure und 1,4,5,8-Naphthalintetracarbonsäure.
   Als Polyole seien beispielhaft genannt: Triethylenglykol, Dipropylenglykol, Ethylenglykol, Propylenglykol, Butandiol-1,4, Hexandiol-1,4, Diethylenglykol, Neopentylglykol, aber auch Polyethylenglykol sowie Polypropylenglykol, 1,3-Propandiol, 1,5-Pentandiol, 2,3-Butandiol, 2,5-Hexandiol, 3-Methyl-1,5-Pentandiol, Butylendiol-1,4, 2-Methyl-2-propyl-1,3-propandiol, 2-Ethyl-1,3-hexandiol, 2,5-Dimethyl-2,5-hexandiol, 2,2,4-Trimethyl-1,3-pentandiol, 1,12-Octadecandiol, 2-Butin-diol sowie Glycerin, Trimethylolpropan, Pentaerythrit, sorbit, Mannit oder Rohrzucker.
   Besonders geeignet sind aliphatische, cycloaliphatische, araliphatische und aromatische Diisocyanate zur Umsetzung mit den Polyhydroxylverbindungen der Formel (V) und (IV) z.B.:
   1,4-Diisocyanatobutan, 1,6-Diisocyanatohexan, 1,5-Diisocyanato-2,2-dimethylpentan, 2,2',4"- bzw. 2,4',4"-Trimethyl-1,6-diisocyanato-hexan, 1,3- und 1,4-Diisocyanatocyclohexan, 1-Isocyanato-3,3,5-trimethyl-5-isocyanatomethylcyclohexan, 1-Isocyanato-1-methyl-4-isocyanatomethylcyclohexan, 4,4'-Diisocyanatohexylmethan, 2,2'- 2,4'- und 4,4'-Diisocyanatodiphenylmethan, 2,4- und 2,6-Diisocyanatotoluol und 1,5-Diisocyanatonaphthalin sowie beliebige Gemische dieser Diisocyanate.
   Die Polyhydroxylverbindungen der Formeln (V) und (VI) werden aus denoben genannten Ausgangsverbindungen in an sich bekannter Weise durch Veresterung gewonnen. Die Umsetzung mit dem Diisocyanat zu den modifizierten Polyisocyanaten der Formeln II und III erfolgt ebenfalls in an sich bekannter Weise.
   b) Als nicht modifizierte Polyisocyanate sind verwendbar: aliphatische, cycloaliphatische, araliphatische oder aromatische Isocyanate der NCO-Funktionalität von 1,8 bis 4,2. Bevorzugt werden verwendet Polyisocyanate, welche Uretdion- und/oder Isocyanurat- und/oder Allophanat- und/oder Biuret- und/oder Oxadiazinstrukturen aufweisen und die in bekannter Weise aus aliphatischen, cycloaliphatischen, araliphatischen oder aromatischen Diisocyanaten zugänglich sind.
      Es handelt sich hier bevorzugt um im wesentlichen aus trimerem 1,6-Diisocyanatohexan oder 1-Isocyanato-3,3,5-trimethyl-5-isocyanatomethyl-cyclohexan und den entsprechenden höheren Homologen bestehenden, Isocyanuratgruppen und gegebenenfalls Uretdiongruppen aufweisenden Polyisocyanatgemischen mit einem NCO-Gehalt von 19 bis 24 Gew.-%. Besonders bevorzugt sind die entsprechenden, weitgehend Uretdiongruppen-freien, Isocyanuratgruppen aufweisenden Polyisocyanate des genannten NCO-Gehaltes, die durch an sich bekannte, katalytische Trimerisierung unter Isocyanurat-Bildung von 1,6-Diisocyanatohexan oder 1-Isocyanato-3,3,5-trimethyl-5-isocyanatomethyl-cyclohexan erhalten werden und die vorzugsweise eine (mittlere) NCO-Funktionalität von 3,2 bis 4,2 aufweisen. Bevorzugt sind auch die durch Reaktion von 1,6-Diisocyanatohexan mit einem Unterschuß an Wasser in bekannter Weise erhaltenen, im wesentlichen Biuretgruppen aufweisenden trimeren Polyisocyanate mit einem NCO-Gehalt von 19 bis 24 Gew.-%.
   c) Gegebenenfalls Estergruppen enthaltende Polyalkylenoxidpolyetheralkohole sind ein- oder mehrwertige, im statistischen Mittel 5 bis 70, vorzugsweise 6 bis 60 Ethylenoxideinheiten pro Molekül enthaltende Polyalkylenoxidpolyetheralkohole, wie sie in an sich bekannter Weise durch Alkoxylierung geeigneter Startermoleküle zugänglich sind.
      Zur Herstellung dieser Polyalkylenoxidpolyetheralkohle können beliebige ein- oder mehrwertige Alkohole des Molekulargewichtsbereichs 32 bis 150 g/mol, wie sie beispielsweise auch gemäß EP-A 0 206 059 Verwendung finden, als Startmoleküle eingesetzt werden. Bevorzugt werden als Startermoleküle monofunktionelle aliphatische Alkohole mit 1 bis 4 Kohlenstoffatomen verwendet. Besonders bevorzugt ist die Verwendung von Methanol oder Ethylenglykolmonomethylether. Für die Alkoxylierungsreaktion geeignete Alkylenoxide sind insbesonders Ethylenoxid und Propylenoxid, die in beliebiger Reihenfolge oder auch im Gemisch bei der Alkoxylierungsreaktion eingesetzt werden können.
      Bei den oben genannten Polyalkylenoxidpolyetheralkoholen handelt es sich entweder um reine Polyethylenoxidpolyether oder um gemischte Polyalkylenoxidpolyether, die mindestens eine Polyethersequenz aufweisen, die mindestens 5, im allgemeinen 5 bis 70, vorzugsweise 7 bis 60 und besonders bevorzugt 7 bis 20, Ethylenoxideinheiten besitzt, und deren Alkylenoxideinheiten zu mindestens 60 Mol-%, vorzugsweise zu mindestens 70 Mol-%, aus Ethylenoxideinheiten bestehen. Bevorzugte derartige Polyalkylenoxidpolyetheralkohole sind monofunktionelle, auf einem aliphatischen, 1 bis 4 Kohlenstoffatome aufweisenden Alkohol gestarteten Polyalkylenoxidpolyether, die im statistischen Mittel 7 bis 60 Ethylenoxideinheiten enthalten. Besonders bevorzugte Polyalkylenoxidpolyetheralkohole sind reine Polyethylenglykolmonomethyletheralkohole, die im statistischen Mittel 7 bis 20 Ethylenoxideinheiten aufweisen.
      Geeignete estergruppenhaltige Polyalkylenoxidpolyether sind OH-terminierte Polyesterether, die durch Umsetzung von aliphatischen C2- bis C8-Dicarbonsäuren oder deren Estern oder Säurechloriden mit Polyethern aus der Gruppe der Polyethylenoxide, Polypropylenoxide oder deren Gemischen oder Mischpolyethern daraus, wobei pro OH-Äquivalent des Polyethers 0,8 bis 0,99 Äquivalente an Carboxyl-Gruppen oder deren Derivaten eingesetzt werden, erhältlich sind und ein mittleres Molgewicht unter 10 000 g/mol, vorzugsweise unter 3 000 g/mol aufweisen und Hydroxylendgruppen besitzen.
   d) Für die unter d) erwähnten Amine seien folgende beispielhaft genannt:
      N,N'-Dimethylethylendiamin, N,N'-Dimethylpropylendiamin, Dimethylaminohydroxyethan, Dimethylaminohydroxypropan, Diethylaminohydroxyethan, Dibutylaminohydroxyethan, Diethylaminoethoxyhydroxyethan, (2-Diethylaminoethoxy)-ethoxyhydroxyethan, N,N'-Triethyl-N'-[ώ-hydroxy-tetraethoxyethyl]propylendiamin, N-Hydroxyethyl-morpholin, N-Hydroxyethyl-methylpiperazin, N-Hydroxyethylpiperidin, N-Hydroxyethylpyrrolidin, 4-Hydroxy-N-methylpiperidin, 4-Hydroxy-1-dimethylaminocyclohexan, 1,3-Bis-(dimethylamino-ethoxy)-2-hydroxypropan, 1,3-Bis-(dimethylamino-propoxy)-2-hydroxypropan sowie alle weiteren Amine, die in EP-A 0 582 166 beispielhaft genannt sind, desweiteren auch alle weiteren, Aminofunktionen und gegebenenfalls Hydroxylfunktionen enthaltende Verbindungen, die in der gleichen Offenlegungsschrift erwähnt sind (S. 10 oben bis S. 15, Zeile 25).

Die Amine mit mehreren isocyanatreaktiven funktionellen Gruppen besitzen im allgemeinen bevorzugt ein mittleres Molgewicht unter 10.000 g/mol.

Besonders bevorzugt sind solche mit einem mittleren Molgewicht unter 5.000 g/mol, insbesondere unter 3.000 g/mol.

Es ist aber auch möglich, durch Protonierung und/oder Quaternierung Ammoniumgruppen enthaltende gegenüber Isocyanaten reaktiven Verbindungen zu verwenden, es seien beispielsweise erwähnt: die durch Umsetzung von Säuren oder Alkylierungsmitteln mit den oben erwähnten Aminen d) erhältlichen Verbindungen, deren tertiäre Aminogruppen ganz oder zum Teil in Ammoniumgruppen umgewandelt wurden.

Für diese Umsetzung geeignete Säuren sind vorzugsweise Essigsäure, Ameisensäure und HCl, als Alkylierungsmittel kommen beispielsweise C₁-C₄-Alkylchloride und -bromide sowie Dialkylsulfate wie Dimethylsulfat oder Diethylsulfat in Frage.

Die wasserdispergierbaren Polyisocyanate können hergestellt werden durch Umsetzung in beliebiger Reihenfolge der:
a) modifizierten Polyisocyanate der Formel (II) oder (III)
b) nicht modifizierten Polyisocyanate,
c) gegebenenfalls Estergruppen enthaltenden Polyalkylenoxidpolyetheralkohole sowie gegebenenfalls
d) cycloaliphatischen und/oder aliphatischen Amine, welche gegebenenfalls Ether-, Ester- oder Amidgruppen enthalten und welche mindestens eine isocyanatreaktive funktionelle Gruppe aufweisen und mindestens eine tertiäre Aminogruppe und/oder Ammoniumgruppe.

Wenn die Amine d) Polyetherketten enthalten, kann auch ihre Umsetzung mit den Polyisocyanaten direkt zu wasserdispergierbaren Polyisocyanaten führen, so dass der Anteil an Komponente c) gegebenenfalls reduziert werden kann. Die modifizierten Polyisocyanate a) und die nicht modifizierten Polyisocyanate b) können entweder separat oder im Gemisch auch in Kombination mit externen ionischen oder nichtionischen Emulgatoren eingesetzt werden. Solche Emulgatoren sind beispielsweise in Houben-Weyl, "Methoden der organischen Chemie", Thieme-Verlag, Stuttgart (1961), Bd. XIV/1, Teil 1, Seite 190 bis 208, in US-PS 3 428 592 und in EP-A 0 013 112 beschrieben. Die Emulgatoren werden in einer die Dispergierbarkeit gewährleistenden Menge eingesetzt.

Falls zunächst Polyisocyanate a) und b) mit Polyalkylenoxidpolyetheralkoholen c) in an sich bekannter Weise umgesetzt werden, wird bevorzugt ein NCO/OH-Äquivalentverhältnis von mindestens 2:1 (z.B. im allgemeinen von 4:1 bis ca. 1.000:1) eingehalten, wodurch Polyether-modifizierte Polyisocyanate mit einer mittleren NCO-Funktionalität von 1,8 bis 4,2, vorzugsweise von 2,0 bis 4,0, einem Gehalt an aliphatisch oder cycloaliphatisch gebundenen Isocyanatgruppen von 1,0 bis 21,5 Gew.-% und einem Gehalt an innerhalb von Polyetherketten angeordneten Ethylenoxideinheiten (berechnet als C₂H₄O, Molekulargewicht = 44 g/mol) von 2 bis 20 Gew.-%, wobei die Polyetherketten im statischen Mittel 5 bis 70 Ethylenoxideinheiten aufweien, erhalten werden.

Zur Durchführung des erfindungsgemäßen Verfahrens sind auch die entsprechenden, durch Protonierung und/oder Quaternierung der wasserdispergierbaren Polyisocyanate erhältlichen, Ammoniumgruppen aufweisenden wasserdispergierbaren Polyisocyanatgemische geeignet. Zur Quatemierung können Alkylierungsmittel wie z.B. Dimethylsulfat, Diethylsulfat oder C₁-C₄-Alkylhalogenide und -sulfonate verwendet werden.

Die Ausgangskomponenten werden in beliebiger Reihenfolge unter Ausschluß von Feuchtigkeit vorzugsweise ohne Lösungsmittel umgesetzt. Mit steigender Menge an Alkohol-Komponente steigt auch die Viskosität des Endproduktes, so dass in bestimmten Fällen (wenn die Viskosität z.B. über 100 Pas ansteigt) ein Lösungsmittel zugesetzt werden kann, das vorzugsweise mit Wasser mischbar ist, aber gegenüber dem Polyisocyanat inert ist. Geeignete Lösungsmittel sind: Alkylether-acetate, Glykoldiether, Toluol, Carbonsäureester, Aceton, Methylethylketon, Tetrahydrofuran und Dimethylformamid.

Durch an sich bekannte Katalysatoren wie Dibutylzinndilaurat, Zinn-(II)-octoat oder 1,4-Diazabicyclo[2,2,2]octan in Mengen von 10 bis 1.000 ppm, bezogen auf die Reaktionskomponenten kann die Reaktion beschleunigt werden. Die Reaktion wird bei Temperaturen bis 130°C, vorzugsweise bei 10°C bis 100°C, besonders bevorzugt bei 20°C bis 80°C, durchgeführt. Die Reaktion kann durch Titration des NCO-Gehaltes oder durch Auswertung der NCO-Bande des IR-Spektrums bei 2260 bis 2275 cm⁻¹ verfolgt werden und ist beendet, wenn der Isocyanatgehalt nicht mehr als 0,1 Gew.-% oberhalb des Wertes liegt, der dem vollständigen Umsatz entspricht. In der Regel sind Reaktionszeiten von weniger als 24 Stunden ausreichend. Bevorzugt ist lösungsmittelfreie Synthese.

Die wasserdispergierbaren Polyisocyanatgemische sind technisch gut handhabbar und über Monate unter Ausschluß von Feuchtigkeit lagerstabil. Sie werden vorzugsweise ohne organische Lösungsmittel eingesetzt. Sie sind gegebenenfalls unter Zusatz von Säuren und/oder bei Temperaturen bis 100°C in Wasser sehr leicht zu emulgieren. Der Wirkstoffgehalt der Emulsion kann bis 70 Gew.-% betragen. Es ist aber vorteilhafter, Emulsionen mit einem Wirkstoffgehalt von 1 bis 50 Gew.-% herzustellen, die dann vor der Dosierstelle gegebenenfalls weiter verdünnt werden können. Zur Emulgierung eignen sich die in der Technik üblichen Mischaggregate (Rührer, Mischer mit Rotor-Stator-Prinzip und z.B. Hochdruckemulgiermaschinen).

Die bevorzugten Polyisocyanate sind selbstemulgierend, d.h. sie lassen sich nach Zugabe zur Wasserphase auch ohne Einwirkung hoher Scherkräfte leicht emulgieren. In der Regel reicht ein statischer Mischer aus. Die erhaltenen Emulsionen besitzen eine bestimmte Verarbeitungszeit, die von der Struktur der erfindungsgemäß einzusetzenden Polyisocyanate, insbesondere von deren Gehalt an basischen N-Atomen abhängt. Die Verarbeitungszeit einer solchen wäßrigen Emulsion beträgt in der Regel bis zu 24 Stunden. Die Verarbeitungszeit ist als die Zeit definiert, in der das Optimum der Trocken- und Naßfestwirkung erreicht wird.

Zur Erleichterung der Einarbeitung in die wäßrige Phase kann es zweckmäßig sein, das wasserdispergierbare Polyisocyanatgemisch in einem gegenüber Isocyanatgruppen inerten Lösungsmittel gelöst einzusetzen. Geeignete Lösungsmittel sind beispielsweise Essigsäureethylester, Ethylenglykol-diacetat, Propylenglykol-Diacetat, 2-Butanon, 1-Methoxypropyl-2-acetat, Toluol oder deren Gemische. Der Anteil der Lösungsmittel in der Lösung des Polyisocyanats sollte höchstens 80 Gew.-%, vorzugsweise höchstens 50 Gew.-% betragen. Besonders bevorzugt ist jedoch die erfindungsgemäße Verwendung lösungsmittelfreier, wasserdispergierbarer Polyisocyanate. Die für das erfindungsgemäße Verfahren geeigneten cellulosehaltigen Materialien sind zum Beispiel Papier oder papierähnliche Materialien wie Pappe und Karton. Die für die Naßfest- und Trockenfestausrüstung bevorzugten Polyisocyanatgemische besitzen eine NCO-Funktionalität größer 2.

Zur Trocken- und Naßfestausrüstung können die wasserdispergierbaren Polyisocyanate in der Masse eingesetzt werden, sie werden dann der cellulosehaltigen Dispersion der Faserrohstoffe direkt zugesetzt. Dazu emulgiert man das Polyisocyanatgemisch bei 20 bis 80°C in Wasser und gibt die dabei erhaltene Emulsion zu einer Suspension des Faserrohstoffs oder dispergiert sie direkt in der Suspension der Faserstoffe. Aus dieser Suspension bildet sich durch Entwässerung das Papier, das anschließend getrocknet wird. Zur Emulgierung des Polyisocyanatgemisches ist es zweckmäßig, die 1- bis 4- fäche Menge an Wasser vorzugeben. Auch höhere Wassermengen sind möglich. Zur Behandlung der Oberfläche wird ein fertiges Rohpapier mit einer Emulsion des Polyisocyanatgemischs in Wasser behandelt und anschließend getrocknet Der Einsatz in der Leimpresse ist möglich. Dabei wird das in Wasser emulgierte Polyisocyanatgemisch auf die fertige Papierbahn übertragen.

Der Trocken- und Naßfesteffekt wird sofort nach der Trocknung erzielt. Der durch Oberflächenbehandlung erzielbare Naßfesteffekt übersteigt den mit den bisher bekannten Naßfestmitteln bei gleicher Dosierung an Wirksubstanz erreichbaren wesentlich.

Es ist besonders bevorzugt, die wäßrige Emulsion der Polyisocyanate innerhalb von 60 Minuten, vorzugsweise innerhalb von 15 Minuten zum Faserstoff zu dosieren. Um die optimale Naßfestigkeit unter Praxisbedingungen zur erzielen, ist eine Dosierung des Polyisocyanats z.B. kurz vor dem Stoffauflauf der Papiermaschine besonders empfehlenswert. Zur Prüfung wird man im allgemeinen im Labor Papierblätter mit einem Flächengewicht von 50 bis 100 g/m² bilden.

In Wasser hydrolysieren die NCO-Gruppen der erfindungsgemäß einzusetzenden Polyisocyanatgemische langsam unter CO₂-Entwicklung zu den entsprechenden Aminen, die mit noch vorhandenen NCO-Gruppen teilweise zu Harnstoff-Gruppen reagieren. Vorteilhafterweise treten jedoch keine Ausfällungen auf.

Erfindungsgemäß können die Produkte im pH-Bereich von 4 bis 10, vorzugsweise von 5,5 bis 9 in der Masse zum Feststoff dosiert werden. Besonders bevorzugt ist die Anwendung im neutralen pH-Bereich (pH 6 bis 7,5). In diesem pH-Bereich liegt ein Teil der tertiären Aminogruppen in protonierter Form vor. Es ist auch möglich, die Dispergierung unter Zusatz von Säure durchzuführen. Eine vom pH-Wert unabhängige kationische Ladung wird dann erhalten, wenn die durch Quaternierung der tertiären Aminogruppen erhaltenen Polyisocyanate eingesetzt werden. Eine Quaternierung ist aber für die meisten Anwendungen nicht erforderlich.

Die Einsatzmengen an erfindungsgemäß einzusetzenden wasserdispergierbaren Polyisocyanat richten sich nach dem angestrebten Effekt. In der Regel sind Einsatzmengen von 0,001 bis 50 Gew.-%, vorzugsweise 0,1 bis 10 Gew.-%, besonders bevorzugt 0,1 bis 2,0 Gew.-%, Wirkstoff, bezogen auf trockenen Faserrohstoff ausreichend. Die Dosierung an Wirksubstanz, bezogen auf Faserrohstoff, entspricht der von bekannten Naßfestmitteln des Polyamidamin-Epichlorhydrin-Typs.

Die erfindungsgemäß einzusetzenden Polyisocyanate ergeben gebrauchsfertige Papiere mit guter Naßfestigkeit sofort ab Maschine. Durch Lagerung des fertigen Papiers und/oder eine Nachkondensation kann eine Verstärkung der Naßfestwirkung erreicht werden. Generell ist aber bereits ab Maschine eine höhere Naßfestigkeit erreichbar als mit konventionellen Naßfestmitteln. Auch die Trockenfestigkeit ist gegenüber konventionellen Trockenfestmitteln verbessert.

Das erfindungsgemäße Verfahren wird unter den in der Papierindustrie üblichen Verarbeitungstemperaturen durchgeführt. Die Verarbeitungsdauer ist dabei von der Temperatur abhängig. Im Temperaturbereich von 20 bis 25°C ist die Verarbeitungsdauer relativ lang. Die Naßfestwirkung erreicht nach 6-stündiger Lagerung der wäßrigen Emulsion noch ca. 70 % des Wertes bei sofortiger Anwendung der Emulsion. Bei höherer Temperatur, z.B. bei 50°C, ist eine Verarbeitung innerhalb von 6 Stunden zu empfehlen. Die maximale Naßfestwirkung ist dagegen überraschenderweise kaum von der Kontaktzeit mit der Cellulose abhängig. Papiere, die sofort und nach einer Kontaktzeit von 2 Stunden nach Zusatz des wasserdispergierbaren Polyisocyanates zum Papierfaserstoff gebildet wurden, zeigen jeweils die gleiche Naßfestigkeit. Durch geeignete Wahl der Ausgangskomponenten kann die Festigkeit des Papiers in der gewünschten Weise eingestellt werden. Das erfindungsgemäße Verfahren eignet sich nicht nur zur Herstellung von trockenfesten und wasserfesten Papieren, sondern auch zur Herstellung von öl- und benzinständigen Papieren.

Die wasserdispergierbaren Polyisocyanate sind in Kombination mit anderen kationischen Hilfsmitteln, wie Retentionsmitteln, Fixierhilfsmitteln, Trockenhilfsmittel und Naßfestmitteln, einsetzbar. Insbesondere durch Zusatz von handelsüblichen Retentionsmitteln vom Typ der kationischen Polykondensate und Polymerisate, z.B. der Polyamide, der Polyethylenimine, der Polyamidamine und der Polyacrylamide sowie der Dual-Systeme, bestehend aus kationischen oder kationischen und anionischen und gegebenenfalls partikulären Komponenten wie Kieselsolen etc. kann die Fixierung von Füllstoffen noch verstärkt werden.

Dies ist besonders dann von Interesse, wenn eine Anwendung im Laminatpapier-Bereich gedacht ist. Bevorzugte Retentionsmittel im Sinne der Erfindung sind kationische Polykondensate aus Polyaminen, vorzugsweise N-Methyl-bis(3-aminopropyl)-amin, und Alkylendihalogeniden, vorzugsweise Dichlorethan. Es sei jedoch hervorgehoben, dass der gewünschte Naßfesteffekt auch ohne Zusatz von besonderen Fixierhilfsmitteln zu erzielen ist. Die Festigkeit des Papiers kann insbesondere durch Kombination mit Polysacchariden wie Hydroxyethylcellulose, Carboxymethylcellulose, Stärke, Galactomannanen oder deren kationischen Derivaten erhöht werden.

Selbstverständlich können die erfindungsgemäß einzusetzenden Polyisocyanatgemische gegebenenfalls mit den obengenannten kationischen Hilfsmitteln gemeinsam, d.h. gleichzeitig oder nacheinander, eingesetzt werden. Da viele der Hilfsmittel jedoch organisch gebundenes Halogen enthalten, ist eine Kombination mit AOX-freien und/oder AOX-armen Hilfsmitteln besonders bevorzugt, da die chlorfreie Papierherstellung vorrangiges Ziel ist.

Alle mit Hilfe der erfindungsgemäßen wasserdispergierbaren Polyisocyanate hergestellten cellulosehaltigen, gegebenenfalls holzhaltigen Materialien wie Papier, Pappe oder Karton sind wiederaufschließbar.

Dieses Wiederaufschließen mit dem Ziel der Wiederverwendung der Faserrohstoffe ist auf verschiedene Weise möglich:
a) Durch Behandlung mit Alkalien oder Säuren, bevorzugt mit Alkalien bei leicht erhöhter Temperatur, 35 bis 120°C, bevorzugt 40 bis 110°C, gegebenenfalls unter Mitverwendung von Oxidationsmitteln wie H₂O₂ oder K₂S₂O₈.
b) Durch Behandlung mit Ozon in neutralem Milieu.
c) Durch Behandlung mit estergruppenspaltenden Enzymen.
d) Durch Behandlung mit estergruppenspaltenden Mikroorganismen.

Diese an sich bekannten Methoden führen bei einem naßfesten cellulosehaltigen Material zum Verlust der Naßfestigkeit und zur Möglichkeit, durch Zerfaserung der cellulosehaltigen Materialien die Faserrohstoffe zurückzugewinnen.

Die Reaktionen a) bis d) laufen normalerweise sehr glatt ab, jedoch ist eine generelle Angabe von Reaktionszeiten nicht möglich, da diese im starken Maße abhängig sind vom Grade der Naßverfestigung und beispielsweise vom Flächengewicht der wiederaufzuschließenden cellulosehaltigen Materialien. Des weiteren ist es möglich, mit Hilfe der wasserdispergierbaren Polyisocyanate der Formeln (II) und (III), sei in Substanz oder in wäßriger Suspension, chemisch oder biologisch abbaubare Beschichtungsmittel, Klebstoffe, Bindemittel oder Kunststoffe herzustellen.

### Ausführungsbeispiele

### 1. Herstellung der modifizierten Polyisocyanate

### Modifiziertes Polyisocyanat 1

200 g raffiniertes Ricinusöl (nOH = 0,579 mol) werden zusammen mit 389 g Hexamethylendiisocyanat (nNCO = 4,632 mol) bei 80°C gerührt, bis der Isocyanatgehalt auf 28,3 % abgesunken ist. Das überschüssige Isocyanat wird dann mit Hilfe eines Dünnschichtverdampfers entfernt; der Isocyanatgehalt beträgt 7,9 % (theoretischer Wert 8,18 %), die Viskosität ist 4533 mPas.

### 2. Herstellung der wasserdispergierbaren Polyisocyanate

### 2.1 Wasserdispergierbares Polyisocyanat 1

24,7 g modifiziertes Polyisocyanat 1 werden in der Wärme mit 49,5 g eines durch Trimerisierung eines Teils der Isocyanatgruppen von 1,6-Diisocyanatohexan hergestellten, Isocyanatgruppen aufweisenden Polyisocyanates, das im wesentlichen aus Tris-(6-isocyanatohexyl)-isocyanurat sowie dessen höheren Homologen besteht, und einen NCO-Gehalt von 20,5 %, einen Gehalt an freiem 1,6-Diisocyanatohexan von weniger als 0,3 % und eine Viskosität von 1000 mPas (25°C) aufweist, vermischt und mit 24,8 g eines auf 2-(2-Methoxyethoxy)ethanol gestarteten Polyethers auf Basis von Ethylenoxid mit einem Zahlenmittel des Molgewichtes von 350 g/mol und einer Hydroxylzahl von 160 mg KOH/g durch Rühren bei 60°C umgesetzt. Der Isocyanatgehalt betrug 8,5 %, die Viskosität 2733 mPas (25°C).

### 2.2 Wasserdispergierbares Polyisocyanat 2

37,1 g modifiziertes Polyisocyanat 1 werden mit 37,1 g eines durch Trimerisierung von 1,6-Düsocyanatohexan wie unter 2.1 beschrieben, hergestellten Polyisocyanates vermischt und mit 24,8 g eines auf 2-(2-Methoxyethoxy)ethanol gestarteten Polyethers, wie unter 2.1 beschrieben, und 1 g Dimethylaminoethanol bei 60°C umgesetzt. Der Isocyanatgehalt betrug 6,5 %; die Viskosität 3716 mPas (25°C).

### 2.3 Wasserdispergierbares Polyisocyanat 3

49,5 g modifiziertes Polyisocyanat 1 werden mit 24,7 g eines durch Trimerisierung von 1,6-Diisocyanatohexan wie unter 2.1 beschrieben, hergestellten Polyisocyanates vermischt und mit 24,8 g eines auf 2-(2-Methoxyethoxy)-ethanol gestarteten Polyethers, wie unter 2.1 beschrieben, und 1 g Dimethylaminoethanol bei 60°C umgesetzt. Der Isocyanatgehalt betrug 4,9 %; die Viskosität 4409 mPas (25°C).

### 2.4 Wasserdispergierbares Polyisocyanat 4 (Vergleichsbeispiel ohne modifiziertes Isocyanat)

82,2 g eines durch Trimerisierung von 1,6-Diisocyanatohexan wie unter 2.1 beschrieben hergestellten Polyisocyanates, werden mit 16,9 g eines auf 2-(2-Methoxyethoxy)ethanol gestarteten Polyethers, wie unter 2.1 beschrieben, und 1 g Dimethylaminoethanol bei 60°C umgesetzt. Der Isocyanatgehalt betrug 14,1 %; die Viskosität 3500 mPas (25°C).

### 3. Herstellung von Papier und Prüfung der Naßfestigkeit

Eine Mischung aus 80 % gebleichtem Kiefernsulfat-Zellstoff und 20 % gebleichtem Birkensulfat-Zellstoff wird bei einer Stoffdichte von 2,5 % im Holländer auf einem Mahlgrad von 38° SR gemahlen. Sodann werden jeweils 100 g der erhaltenen Zellstoffsuspension in Bechergläsern mit Wasser auf 1000 ml Volumen verdünnt

0,4 Gew.-% und 0,8 Gew.-% der hergestellten wasserdispergierbaren Isocyanate, bezogen auf Feststoff, werden nach vorheriger Dispergierung in Wasser (Dispersion mit 20 Gew.-% Polyisocyanat) zu den Zellstoff-Dispersionen gegeben und diese Dispersionen nach Zugabe noch 3 Minuten gerührt.

Danach werden mit den Inhalten der Bechergläser auf einem Blattbildner (Rapid-Köthen-Gerät) Papierblätter mit einem Flächengewicht von ca. 80 g/m² gebildet. Die Papierblätter werden bei 85°C 8 Minuten im Vakuum bei 20 mm Hg getrocknet und im Trockenschrank noch 10 Minuten bei 110°C nacherhitzt. Aus jedem Papierblatt werden nach Klimafixierung 5 Prüfstreifen von 1,5 cm Breite ausgeschnitten und 5 Minuten in destilliertes Wasser eingetaucht Sodann werden die nassen Streifen auf einer Zugmaschine sofort auf ihre Naßbruchlast geprüft. Die Prüfergebnisse sind in der folgenden Tabelle 1 zusammengefaßt.

**Tabelle 1**

| Naßbruchlast bei Einsatz in der Masse, nach Kondensation bei 110°C | | | | |
|---|---|---|---|---|
| Anwendungsbeispiel Nr. | wasserdispergierbares-Isocyanat Nr. | NCO % | Naßbruchlastbei 0,4 %/0,8 % Einsatz [N] | Bemerkungen |
| 1 | 1 | 8,5 | 8,8/12 | erfindungsgemäß |
| 2 | 2 | 6,5 | 8,6/12 | |
| 3 | 3 | 4,9 | 7,7/11,5 | |
| 4 | 5 | 14,1 | 12,5 / 13,7 | Vergleich |

### 4. Wiederaufschließversuche im alkalischen Milieu

Die unter Punkt 3 hergestellten Papierblätter werden in kleine Stücke zerrissen und jeweils 0,5 g Papier in 100 ml 2n NaOH bei 90 bis 95°C gerührt. Die folgende Tabelle (Tabelle 2) gibt Aufschluß über den Beginn der Trübung der wäßrigen Phase und über den Zeitpunkt der vollständigen Zerfaserung.

**Tabelle 2**

| Wiederaufschließversuche an Papierproben aus den Anwendungsbeispielen 1 bis 4. | | | | |
|---|---|---|---|---|
| Papier aus Anwendungsbeispiel Nr. | wasserdispergierbares Isocyanat Nr. | Einsetzende Trübung nach (Std.) 0,4 %/0,8 % Einsatz | völlige Zerfaserung nach (Std.) bei 0,4 %/0,8 % Einsatz | Bemerkungen |
| 1 | 1 | 1½/1 | 5½/3½ | erfindungsgemäß |
| 2 | 2 | 1½/¼ | 5½/2½ | |
| 3 | 3 | ½/1 | 3½/4½ | |
| 4 | 4 | X/X | X/X | Vergleich |
| X weder Trübung noch Zerfaserung festzustellen | | | | |

### 5. Wiederaufschließversuche durch Ozonspaltung

In einem Rundkolben mit Gaseinleitungs- und -ableitungsrohr werden 0,27 g Papier in kleinen Stücken, hergestellt unter Verwendung von 0,8 % wasserdispergierbarem Polyisocyanat 2 (Anwendungsbeispiel 2), in 300 ml Wasser vorgelegt und in den Kolben 6 Stunden lang ein Ozon-Luftgemisch eingeleitet.

Als Ozonisator wurde ein Gerät der Fa. Sander, Modell 500, verwendet. Der Luftstrom zum Ozonisator wurde auf eine Geschwindigkeit von 150 l/h reguliert. Durch Eichmessungen konnte ein Ozongehalt von 450 mg O₃/h ermittelt werden. Nach 6 Stunden war das Papier bis auf wenige kleine Stippen komplett zerfasert.

## Patentansprüche

1. Wiederaufschließbare cellulosehaltige, gegebenenfalls holzhaltige Materialien, die erhältlich sind durch Behandeln von cellulosehaltigen, gegebenenfalls holzhaltigen Materialien mit wasserdispergierbaren Polyisocyanaten, welche ihrerseits durch Umsetzung folgender Ausgangskomponenten hergestellt wurden:
a) modifizierte Polyisocyanate der Formel (II) 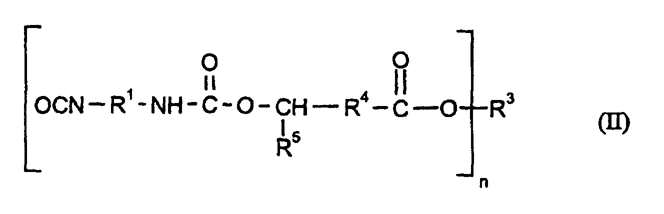 in der bedeuten:
R¹ einen aliphatischen Kohlenwasserstoffrest mit 2 bis 18 Kohlenstoffatomen; einen cycloaliphatischen Kohlenwasserstoffrest mit 4 bis 15 Kohlenstoffatomen; einen aromatischen Kohlenwasserstoffrest mit 6 bis 15 Kohlenstoffatomen oder einen araliphatischen Kohlenwasserstoffrest mit 8 bis 15 Kohlenstoffatomen,
R³ einen mindestens zweiwertigen Kohlenwasserstoffrest,
R⁴ einen aliphatischen Kohlenwasserstoffrest mit 1 bis 18 Kohlenstoffatomen, gegebenenfalls enthaltend mindestens eine Doppelbindung,
R⁵ einen aliphatischen Kohlenwasserstoffrest mit 1 bis 18 Kohlenstoffatomen oder Wasserstoff, wobei die Summe der von R⁴ und R⁵ repräsentierten Kohlenstoffatome 9 bis 34 beträgt,
n eine Zahl > 2
b) nicht modifizierte Polyisocyanate,
c) Polyethylenoxid-polyetheralkohole, die gegebenenfalls Estergruppen enthalten,
d) cycloaliphatische und/oder aliphatische Amine, die gegebenenfalls Ether-, Ester- oder Amidgruppen enthalten und welche mindestens eine isocyanatreaktive funktionelle Gruppe aufweisen und mindestens eine tertiäre Aminogruppe und/oder Ammoniumgruppe enthalten.

2. Wiederaufschließbare cellulosehaltige, gegebenenfalls holzartige Materialien, die erhältlich sind durch Behandeln von cellulosehaltigen, gegebenenfalls holzartigen Materialien mit wasserdispergierbaren Polyisocyanaten, welche ihrerseits durch Umsetzung folgender Ausgangskomponenten hergestellt wurden:
a) modifizierte Polyisocyanate der Formel (III) 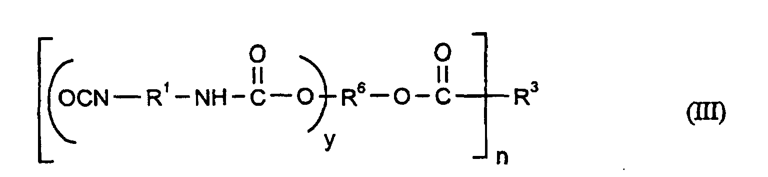 in der bedeuten
R¹ einen aliphatischen Kohlenwasserstoffrest mit 2 bis 18 Kohlenstoffatomen; einen cycloaliphatischen Kohlenwasserstoffrest mit 4 bis 15 Kohlenstoffatomen; einen aromatischen Kohlenwasserstoffrest mit 6 bis 15 Kohlenstoffatomen oder einen araliphatischen Kohlenwasserstoffrest mit 8 bis 15 Kohlenstoffatomen,
R³ einen mindestens zweiwertigen Kohlenwasserstoffrest
R⁶ einen aliphatischen Kohlenwasserstoffrest mit 2 bis 15 Kohlenstoffatomen
n eine Zahl > 2 und
y eine Zahl ≥1,
b) nicht modifizierte Polyisocyanate,
c) Polyethylenoxid-polyetheralkohole, die gegebenenfalls Estergruppen enthalten,
d) cycloaliphatische und/oder aliphatische Amine, die gegebenenfalls Ether-, Ester- oder Amidgruppen enthalten und welche mindestens eine isocyanatreaktive funktionelle Gruppe aufweisen und mindestens eine tertiäre Aminogruppe und/oder Ammoniumgruppe enthalten.

3. Wasserdispergierbare Polyisocyanate, die erhältlich sind durch Umsetzung von
a) modifizierten Polyisocyanaten der Formel (II) 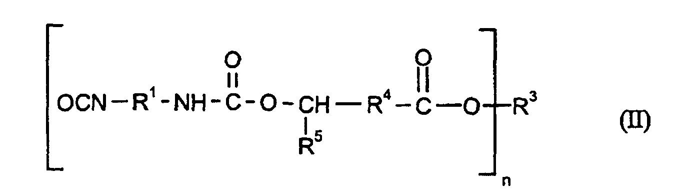 in der bedeuten:
R¹ einen aliphatischen Kohlenwasserstoffrest mit 2 bis 18 Kohlenstoffatomen; einen cycloaliphatischen Kohlenwasserstoffrest mit 4 bis 15 Kohlenstoffatomen; einen aromatischen Kohlenwasserstoffrest mit 6 bis 15 Kohlenstoffatomen oder einen araliphatischen Kohlenwasserstoffrest mit 8 bis 15 Kohlenstoffatomen,
R³ einen mindestens zweiwertigen Kohlenwasserstoffrest,
R⁴ einen aliphatischen Kohlenwasserstoffrest mit 1 bis 18 Kohlenstoffatomen, gegebenenfalls enthaltend mindestens eine Doppelbindung,
R⁵ einen aliphatischen Kohlenwasserstoffrest mit 1 bis 18 Kohlenstoffatomen oder Wasserstoff, wobei die Summe der von R⁴ und R⁵ repräsentierten Kohlenstoffatome 9 bis 14 beträgt,
n eine Zahl > 2
b) nicht modifizierten Polyisocyanaten,
c) Polyethylenoxid-polyetheralkoholen, die gegebenenfalls Estergruppen enthalten,
d) cycloaliphatischen und/oder aliphatischen Aminen, die gegebenenfalls Ether-, Ester- oder Amidgruppen enthalten und welche mindestens eine isocyanatreaktive funktionelle Gruppe aufweisen und mindestens eine tertiäre Aminogruppe und/oder Ammoniumgruppe enthalten.

4. Wasserdispergierbare Polyisocyanate, die erhältlich sind durch Umsetzung von
a) modifizierten Polyisocyanaten der Formel (III) 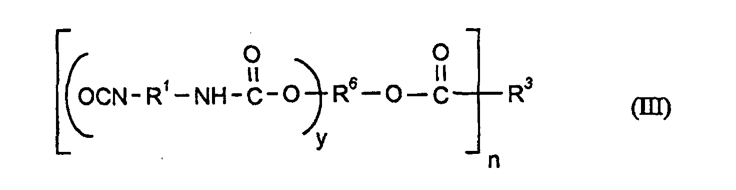 in der bedeuten:
R¹ einen aliphatischen Kohlenwasserstoffrest mit 2 bis 18 Kohlenstoffatomen; einen cycloaliphatischen Kohlenwasserstoffrest mit 4 bis 15 Kohlenstoffatomen; einen aromatischen Kohlenwasserstoffrest mit 6 bis 15 Kohlenstoffatomen oder einen araliphatischen Kohlenwasserstoffrest mit 8 bis 15 Kohlenstoffatomen,
R³ einen mindestens zweiwertigen Kohlenwasserstoffrest,
R⁶ einen aliphatischen Kohlenwasserstoffrest mit 2 bis 15 Kohlenstoffatomen,
n eine Zahl > 2 und
y eine Zahl ≥ 1,
b) nicht modifizierten Polyisocyanaten,
c) Polyethylenoxid-polyetheralkoholen, die gegebenenfalls Estergruppen enthalten,
d) cycloaliphatischen und/oder aliphatischen Aminen, die gegebenenfalls Ether-, Ester- oder Amidgruppen enthalten und welche mindestens eine isocyanatreaktive funktionelle Gruppe aufweisen und mindestens eine tertiäre Aminogruppe und/oder Ammoniumgruppe enthalten.

5. Verfahren zur Herstellung wasserdispergierbaren Polyisocyanaten gemäß Anspruch 3, **dadurch gekennzeichnet, dass** in beliebiger Reihenfolge miteinander umgesetzt werden:
a) modifizierte Polyisocyanate der Formel (II) des Anspruchs 3,
b) nicht modifizierte Polyisocyanate,
c) Polyethylenoxidpolyetheralkohole, die gegebenenfalls Estergruppen enthalten,
d) cycloaliphatische und/oder aliphatische Amine, die gegebenenfalls Ether-, Ester- oder Amidgruppen enthalten und welche mindestens eine isocyanatreaktive funktionelle Gruppe aufweisen und mindestens eine tertiäre Aminogruppe und/oder Ammoniumgruppe enthalten.

6. Verfahren zur Herstellung von wasserdispergierbaren Polyisocyanaten gemäß Anspruch 4, **dadurch gekennzeichnet, dass** in beliebiger Reihenfolge miteinander umgesetzt werden:
a) modifizierte Polyisocyanate der Formel (III) des Anspruchs 4,
b) Polyethylenoxid-polyetheralkohole, die gegebenenfalls Estergruppen enthalten,
d) cycloaliphatische und/oder aliphatische Amine, die gegebenenfalls Ether-, Ester- oder Amidgruppen enthalten und welche mindestens eine isocyanatreaktive funktionelle Gruppe aufweisen und mindestens eine tertiäre Aminogruppe und/oder Ammoniumgruppe enthalten.

7. Modifizierte Polyisocyanate der Formel (III) 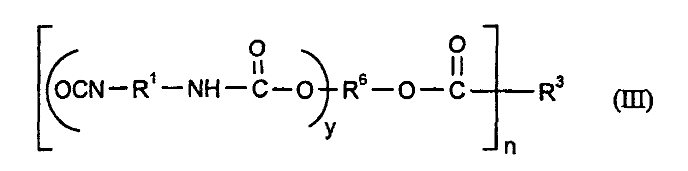 in der bedeuten
R¹ einen aliphatischen Kohlenwasserstoffrest mit 2 bis 18 Kohlenstoffatomen; einen cycloaliphatischen Kohlenwasserstoffrest mit 4 bis 15 Kohlenstoffatomen; einen aromatischen Kohlenwasseerstoffrest mit 6 bis 15 Kohlenstoffatomen oder einen araliphatischen Kohlenwasserstoffrest mit 8 bis 15 Kohlenstoffatomen,
R³ einen aliphatischen Kohlenwasserstoffrest mit 2 bis 15 Kohlenstoffatomen,
R⁶ einen mindestens zweiwertigen Kohlenwasserstoffrest,
n eine Zahl > 2 und
y eine Zahl ≥ 1,

## Claims

1. Repulpable cellulosic, woody or wood-free, materials obtainable by treating cellulosic, woody or wood-free, materials with water-dispersible polyisocyanates which in turn have been prepared by reaction of the following starting components:
a) modified polyisocyanates of the formula (II) 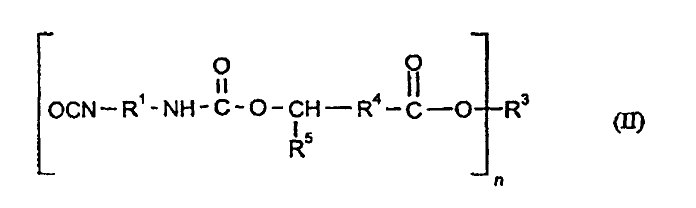 in which
R¹ denotes an aliphatic hydrocarbon radical having 2 to 18 carbon atoms; a cycloaliphatic hydrocarbon radical having 4 to 15 carbon atoms; an aromatic hydrocarbon radical having 6 to 15 carbon atoms or an araliphatic hydrocarbon radical having 8 to 15 carbon atoms,
R³ denotes an at least divalent hydrocarbon radical,
R⁴ denotes an aliphatic hydrocarbon radical which has 1 to 18 carbon atoms and optionally contains at least one double bond,
R⁵ denotes an aliphatic hydrocarbon radical having 1 to 18 carbon atoms or hydrogen, subject to the proviso that the sum total of the carbon atoms represented by R⁴ and R⁵ is 9 to 34,
n denotes a number > 2
b) non-modified polyisocyanates,
c) polyethylene oxide polyether alcohols optionally containing ester groups,
d) cycloaliphatic and/or aliphatic amines which optionally contain ether, ester or amide groups and which comprise at least one isocyanate-reactive functional group and contain at least one tertiary amino group and/or ammonium group.

2. Repulpable cellulosic, woody or wood-free materials obtainable by treating cellulosic, woody or wood-free materials with water-dispersible polyisocyanates which in turn have been prepared by reaction of the following starting components:
a) modified polyisocyanates of the formula (III) 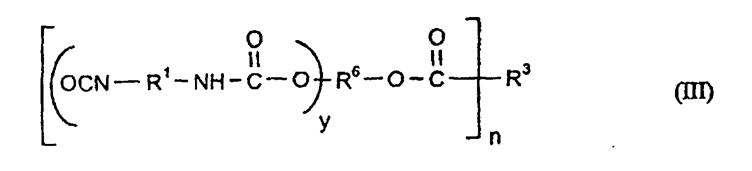 in which
R¹ denotes an aliphatic hydrocarbon radical having 2 to 18 carbon atoms; a cycloaliphatic hydrocarbon radical having 4 to 15 carbon atoms; an aromatic hydrocarbon radical having 6 to 15 carbon atoms or an araliphatic hydrocarbon radical having 8 to 15 carbon atoms,
R³ denotes an at least divalent hydrocarbon radical
R⁶ denotes an aliphatic hydrocarbon radical having 2 to 15 carbon atoms
n denotes a number > 2 and
y denotes a number ≥ 1,
b) non-modified polyisocyanates,
c) polyethylene oxide polyether alcohols optionally containing ester groups,
d) cycloaliphatic and/or aliphatic amines which optionally contain ether, ester or amide groups and which comprise at least one isocyanate-reactive functional group and contain at least one tertiary amino group and/or ammonium group.

3. Water-dispersible polyisocyanates obtainable by reaction of
a) modified polyisocyanates of the formula (II) 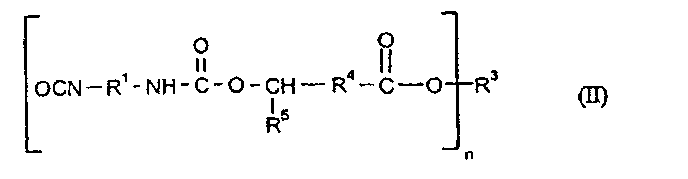 in which
R¹ denotes an aliphatic hydrocarbon radical having 2 to 18 carbon atoms; a cycloaliphatic hydrocarbon radical having 4 to 15 carbon atoms; an aromatic hydrocarbon radical having 6 to 15 carbon atoms or an araliphatic hydrocarbon radical having 8 to 15 carbon atoms,
R³ denotes an at least divalent hydrocarbon radical,
R⁴ denotes an aliphatic hydrocarbon radical which has 1 to 18 carbon atoms and optionally contains at least one double bond,
R⁵ denotes an aliphatic hydrocarbon radical having 1 to 18 carbon atoms or hydrogen, subject to the proviso that the sum total of the carbon atoms represented by R⁴ and R⁵ is 9 to 14,
n denotes a number > 2
b) non-modified polyisocyanates,
c) polyethylene oxide polyether alcohols optionally containing ester groups,
d) cycloaliphatic and/or aliphatic amines which optionally contain ether, ester or amide groups and which comprise at least one isocyanate-reactive functional group and contain at least one tertiary amino group and/or ammonium group.

4. Water-dispersible polyisocyanates obtainable by reaction of
a) modified polyisocyanates of the formula (III) 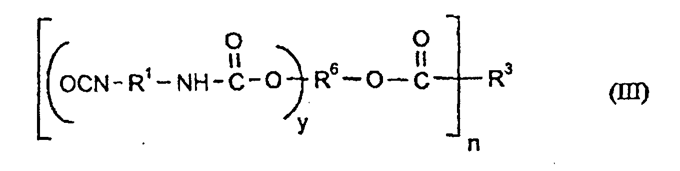 in which
R¹ denotes an aliphatic hydrocarbon radical having 2 to 18 carbon atoms; a cycloaliphatic hydrocarbon radical having 4 to 15 carbon atoms; an aromatic hydrocarbon radical having 6 to 15 carbon atoms or an araliphatic hydrocarbon radical having 8 to 15 carbon atoms,
R³ denotes an at least divalent hydrocarbon radical,
R⁶ denotes an aliphatic hydrocarbon radical having 2 to 15 carbon atoms,
n denotes a number > 2 and
y denotes a number ≥ 1,
b) non-modified polyisocyanates,
c) polyethylene oxide polyether alcohols optionally containing ester groups,
d) cycloaliphatic and/or aliphatic amines which optionally contain ether, ester or amide groups and which comprise at least one isocyanate-reactive functional group and contain at least one tertiary amino group and/or ammonium group.

5. Process for the preparation of water-dispersible polyisocyanates according to Claim 3, **characterized in that** the following are reacted with one another in any desired sequence:
a) modified polyisocyanates of the formula (II) of Claim 3,
b) non-modified polyisocyanates,
c) polyethylene oxide polyether alcohols optionally containing ester groups,
d) cycloaliphatic and/or aliphatic amines which optionally contain ether, ester or amide groups and which comprise at least one isocyanate-reactive functional group and contain at least one tertiary amino group and/or ammonium group.

6. Process for the preparation of water-dispersible polyisocyanates according to Claim 4, **characterized in that** the following are reacted with one another in any desired sequence:
a) modified polyisocyanates of the formula (III) of Claim 4,
b) polyethylene oxide polyether alcohols optionally containing ester groups,
d) cycloaliphatic and/or aliphatic amines which optionally contain ether, ester or amide groups and which comprise at least one isocyanate-reactive functional group and contain at least one tertiary amino group and/or ammonium group.

7. Modified polyisocyanates of the formula (III) 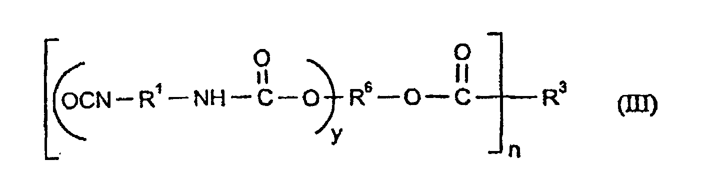 in which
R¹ denotes an aliphatic hydrocarbon radical having 2 to 18 carbon atoms; a cycloaliphatic hydrocarbon radical having 4 to 15 carbon atoms; an aromatic hydrocarbon radical having 6 to 15 carbon atoms or an araliphatic hydrocarbon radical having 8 to 15 carbon atoms,
R³ denotes an aliphatic hydrocarbon radical having 2 to 15 carbon atoms,
R⁶ denotes an at least divalent hydrocarbon radical,
n denotes a number > 2 and
y denotes a number ≥ 1

## Revendications

1. Matériaux cellulosiques recyclables, contenant éventuellement du bois, qui peuvent être obtenus par traitement de matériaux cellulosiques contenant éventuellement du bois avec des polyisocyanates pouvant se disperser dans l'eau, qui ont eux-mêmes été préparés par réaction des constituants de départ suivants:
a) des polyisocyanates modifiés de formule (II) 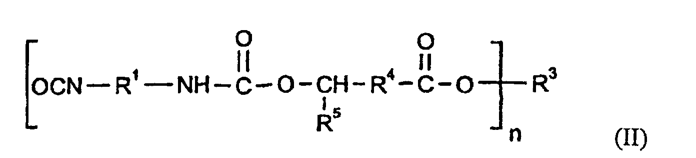 dans laquelle
R¹ représente un reste hydrocarboné aliphatique de 2 à 18 atomes de carbone; un reste hydrocarboné cycloaliphatique de 4 à 15 atomes de carbone; un reste hydrocarboné aromatique de 6 à 15 atomes de carbone ou un reste hydrocarboné araliphatique de 8 à 15 atomes de carbone,
R³ représente un reste hydrocarboné au moins divalent,
R⁴ représente un reste hydrocarboné aliphatique de 1 à 18 atomes de carbone contenant éventuellement au moins une double liaison,
R⁵ représente un reste hydrocarboné aliphatique de 1 à 18 atomes de carbone ou un atome d'hydrogène, la somme des atomes de carbone représentés par R⁴ et R⁵ étant comprise entre 9 et 34, et
n est un nombre supérieur à 2.
b) des polyisocyanates non modifiés,
c) des poly(oxyde d'éthylène)-polyétheralcools contenant éventuellement des groupes ester,
d) des amines cycloaliphatiques et/ou aliphatiques qui contiennent éventuellement des groupes éther, ester ou amide, qui ont au moins un groupe fonctionnel réagissant avec les isocyanates et qui contiennent au moins un groupe amino tertiaire et/ou un groupe ammonium.

2. Matériaux cellulosiques recyclables contenant éventuellement du bois, qui peuvent être obtenus qui peuvent être obtenus par traitement de matériaux cellulosiques contenant éventuellement du bois avec des polyisocyanates pouvant se disperser dans l'eau, qui ont eux-mêmes été préparés par réaction des constituants de départ suivants:
a) des polyisocyanates modifiés de formule (III) 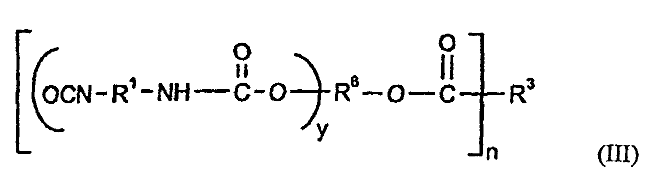 dans laquelle
R¹ représente un reste hydrocarboné aliphatique de 2 à 18 atomes de carbone; un reste hydrocarboné cycloaliphatique de 4 à 15 atomes de carbone; un reste hydrocarboné aromatique de 6 à 15 atomes de carbone ou un reste hydrocarboné araliphatique de 8 à 15 atomes de carbone,
R³ représente un reste hydrocarboné au moins divalent,
R⁶ représente un reste hydrocarboné aliphatique de 2 à 15 atomes de carbone,
n représente un nombre supérieur à 2 et
y représente un nombre égal ou supérieur à 1.
b) des polyisocyanates non modifiés,
c) des poly(oxyde d'éthylène)-polyétheralcools contenant éventuellement des groupes ester,
d) des amines cycloaliphatiques et/ou aliphatiques qui contiennent éventuellement des groupes éther, ester ou amide, qui ont au moins un groupe fonctionnel réagissant avec les isocyanates et qui contiennent au moins un groupe amino tertiaire et/ou un groupe ammonium.

3. Polyisocyanates pouvant se disperser dans l'eau, pouvant être obtenus par réaction
a) de polyisocyanates modifiés de formule (II) 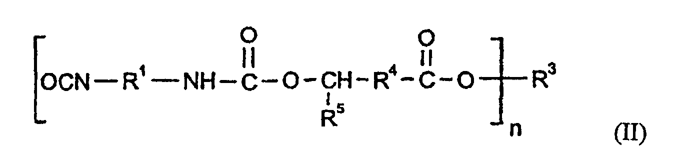 dans laquelle
R¹ représente un reste hydrocarboné aliphatique de 2 à 18 atomes de carbone; un reste hydrocarboné cycloaliphatique de 4 à 15 atomes de carbone; un reste hydrocarboné aromatique de 6 à 15 atomes de carbone ou un reste hydrocarboné araliphatique de 8 à 15 atomes de carbone,
R³ représente un reste hydrocarboné au moins divalent,
R⁴ représente un reste hydrocarboné aliphatique de 1 à 18 atomes de carbone contenant éventuellement au moins une double liaison,
R⁵ représente un reste hydrocarboné aliphatique de 1 à 18 atomes de carbone ou un atome d'hydrogène, la somme des atomes de carbone représentés par R⁴ et R⁵ étant comprise entre 9 et 14, et
n est un nombre supérieur à 2.
b) de polyisocyanates non modifiés,
c) de poly(oxyde d'éthylène)-polyétheralcools contenant éventuellement des groupes ester,
d) d'amines cycloaliphatiques et/ou aliphatiques qui contiennent éventuellement des groupes éther, ester ou amide, qui ont au moins un groupe fonctionnel réagissant avec les isocyanates et qui contiennent au moins un groupe amino tertiaire et/ou un groupe ammonium.

4. Polyisocyanates pouvant se disperser dans l'eau, pouvant être obtenus par réaction
a) de polyisocyanates modifiés de formule (III) 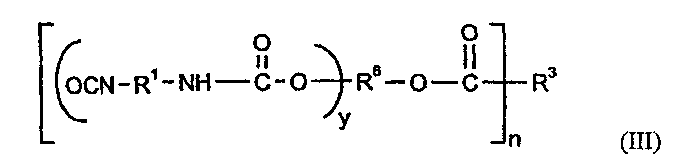 dans laquelle
R¹ représente un reste hydrocarboné aliphatique de 2 à 18 atomes de carbone; un reste hydrocarboné cycloaliphatique de 4 à 15 atomes de carbone; un reste hydrocarboné aromatique de 6 à 15 atomes de carbone ou un reste hydrocarboné araliphatique de 8 à 15 atomes de carbone,
R³ représente un reste hydrocarboné au moins divalent,
R⁶ représente un reste hydrocarboné aliphatique de 2 à 15 atomes de carbone,
n représente un nombre supérieur à 2 et
y représente un nombre égal ou supérieur à 1.
b) de polyisocyanates non modifiés,
c) de poly(oxyde d'éthylène)-polyétheralcools contenant éventuellement des groupes ester,
d) d'amines cycloaliphatiques et/ou aliphatiques qui contiennent éventuellement des groupes éther, ester ou amide, qui ont au moins un groupe fonctionnel réagissant avec les isocyanates et qui contiennent au moins un groupe amino tertiaire et/ou un groupe ammonium.

5. Procédé de préparation de polyisocyanates pouvant se disperser dans l'eau selon la revendication 3, **caractérisé en ce que** l'on fait réagir dans un ordre quelconque:
a) des polyisocyanates modifiés de formule (II) selon la revendication 3,
b) des polyisocyanates non modifiés,
c) des poly(oxyde d'éthylène)-polyétheralcools contenant éventuellement des groupes ester,
d) des amines cycloaliphatiques et/ou aliphatiques qui contiennent éventuellement des groupes éther, ester ou amide, qui ont au moins un groupe fonctionnel réagissant avec les isocyanates et qui contiennent au moins un groupe amino tertiaire et/ou un groupe ammonium.

6. Procédé de préparation de polyisocyanates pouvant se disperser dans l'eau selon la revendication 4, **caractérisé en ce que** l'on fait réagir dans un ordre quelconque:
a) des polyisocyanates modifiés de formule (III) selon la revendication 4,
b) des poly(oxyde d'éthylène)-polyétheralcools contenant éventuellement des groupes ester,
d) des amines cycloaliphatiques et/ou aliphatiques qui contiennent éventuellement des groupes éther, ester ou amide, qui ont au moins un groupe fonctionnel réagissant avec les isocyanates et qui contiennent au moins un groupe amino tertiaire et/ou un groupe ammonium.

7. Polyisocyanates modifiés de formule (III) 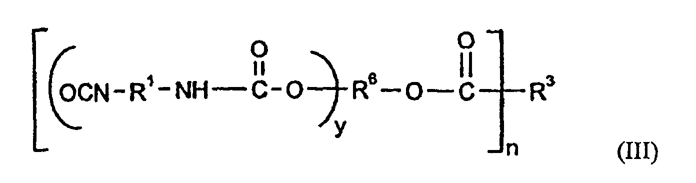 dans laquelle
R¹ représente un reste hydrocarboné aliphatique de 2 à 18 atomes de carbone; un reste hydrocarboné cycloaliphatique de 4 à 15 atomes de carbone; un reste hydrocarboné aromatique de 6 à 15 atomes de carbone ou un reste hydrocarboné araliphatique de 8 à 15 atomes de carbone,
R³ représente un reste hydrocarboné aliphatique de 2 à 15 atomes de carbone,
R⁶ représente un reste hydrocarboné au moins divalent,
n représente un nombre supérieur à 2 et
y représente un nombre égal ou supérieur à 1.
